Europäisches Patentamt

European Patent Office

Office européen des brevets

(11) Veröffentlichungsnummer: **0 309 670 B1**

## (12) EUROPÄISCHE PATENTSCHRIFT

(45) Veröffentlichungstag der Patentschrift: **13.04.94**

(51) Int. Cl.5: **H04L 12/56**

(21) Anmeldenummer: **88111358.3**

(22) Anmeldetag: **14.07.88**

(54) **Konzentrator für schnelle Datenvermittlungsnetze.**

(30) Priorität: **29.09.87 DE 3732824**

(43) Veröffentlichungstag der Anmeldung:
**05.04.89 Patentblatt 89/14**

(45) Bekanntmachung des Hinweises auf die
Patenterteilung:
**13.04.94 Patentblatt 94/15**

(84) Benannte Vertragsstaaten:
**DE FR GB SE**

(56) Entgegenhaltungen:
**EP-A- 0 186 595**
**WO-A-84/03977**

**INTERNATIONAL SWITCHING SYMPOSIUM
1987, "INNOVATIONS IN SWITCHING TECH-
NOLOGY",Phoenix, Arizona, 15.-20. März
1987, Seiten 519-523, IEEE, New York, US; C.
DAY et al.: "Applications of self-routing switches to LATA fiber optic networks"**

**IEEE GLOBAL TELECOMMUNICATIONS CON-
FERENCE, Atlanta, Georgia, 26.-29. November
1984, Band 1, Seiten 121-125, IEEE, New York,
US; A. HUANG et al.: "Starlite: a wideband
digital switch"**

**AFIPS CONFERENCE PROCEEDINGS, 1986
SPRING JOINT COMPUTER CONFERENCE, Atlanta City, New Jersey, 30. April - 2. Mai 1968,
Band 32, Seiten 307-314, Thompson Book
Co., Washington, D.C., US; K.E. BATCHER:
"Sorting networks and their applications"**

(73) Patentinhaber: **SIEMENS AKTIENGESELL-
SCHAFT
Wittelsbacherplatz 2
D-80333 München(DE)**

(72) Erfinder: **Lobjinski, Manfred, Dr.
Besselstrasse 4
D-8000 München 80(DE)**
Erfinder: **Horn, Michael, Dipl.-Math.
Lindenstrasse 10a
D 8000 München 90(DE)**
Erfinder: **Reppekus, Andreas, Dipl.-Ing.
Görzer Strasse 114
D-8000 München 90(DE)**

EP 0 309 670 B1

**Beschreibung**

Die vorliegende Erfindung bezieht sich auf einen Konzentrator für schnelle Datenpaketvermittlungsnetze, bei dem die Gesamtheit der jeweils ersten Bits von Eingangsdatenpaketen auf die Gesamtheit der Schaltelemente des Konzentrators hinsichtlich deren Schaltstellungen einwirkt.

In Vermittlungsknoten zur Vermittlung von Informationen (Sprache und Daten) sind die ankommenden Leitungen meistens nicht voll belegt. Um den Knoten selbst dementsprechend kleiner aufbauen zu können, wird ein Konzentrator zwischen die ankommenden Leitungen und den Knoten geschaltet. Er konzentriert die ankommenden Nachrichten auf eine geringere Anzahl von Leitungen. Ein derartiger Konzentrator soll für zukünftige Paketvermittlungsnetze geeignet sein und dezentral arbeiten, d. h. die Wegeinstellung für die Pakete soll in den einzelnen Koppelpunkten und nicht in einem Zentralprozessor erfolgen.

Ein Lösungsvorschlag für einen derartigen Konzentrator ist aus der internationalen Patentanmeldung (PCT) WO 84/04011 bekannt. Seine Prinzipien werden im folgenden im direkten Vergleich mit der vorliegenden Erfindung aufgezeigt.

Der vorliegenden Erfindung liegt die Aufgabe zugrunde, einen Konzentrator der eingangs genannten Art zu schaffen, der in der Lage ist, Datenpakete von "leeren" Paketen zu trennen.

Die der Erfindung zugrundeliegende Aufgabe wird durch einen Konzentrator der eingangs genannten Art und gemäß dem Oberbegriff des Patentanspruchs 1 gelöst, der erfindungsgemäß durch die im kennzeichnenden Teil des Patentanspruchs 1 angegebenen Merkmale charakterisiert ist.

Vorteilhafte Weiterbildungen der Erfindung sind durch die in den Unteransprüchen angegebenen Merkmale gekennzeichnet.

Im folgenden wird die vorliegende Erfindung anhand mehrerer Figuren im einzelnen beschrieben:

Fig. 1    zeigt schematisch die Funktion und die Beschaltung eines erfindungsgemäß zu verwendenden Beta-Elements.

Fig. 2    zeigt schematisch die Struktur eines Ausführungsbeispiels für einen erfindungsgemäßen Konzentrator für 16 Datenpakete.

Fig. 3    zeigt die innere Struktur des Konzentrators mit einer Blockaufteilung.

Fig. 4    zeigt schematisch die Struktur der ersten Stufe des Konzentrators mit einem Beispiel für die Eingangsbelegung und den Stellungen der Beta-Elemente.

Fig. 5    zeigt schematisch den inneren Aufbau eines komparatorgesteuerten Beta-Elements.

Fig. 6    zeigt einen Beta-Elemente-Block mit mod 2-Summenbildung und bedingter Invertierung (Kreuzung) des Beta-Elements.

Fig. 7    zeigt ein Beispiel für die Schaltungsanordnung zur Summenbildung mit 32 Eingängen, 4 Stufen und einer Gruppengröße 2.

Fig. 8    zeigt ein Beispiel für eine Schaltungsanordnung zur Paketverzögerung für eine laufende Summenbildung.

Im folgenden soll zunächst die Arbeitsweise eines Konzentrators mit $2^n$ Eingangsleitungen erläutert werden.

Alle Pakete treffen synchron beim Konzentrator ein. Die Datenpakete unterscheiden sich von den "leeren" Paketen durch das erste Bit der Adresse, das sogenannte "Activity Bit". Dabei werden Datenpakete mit einer "0" und leere Pakete mit einer "1" gekennzeichnet.

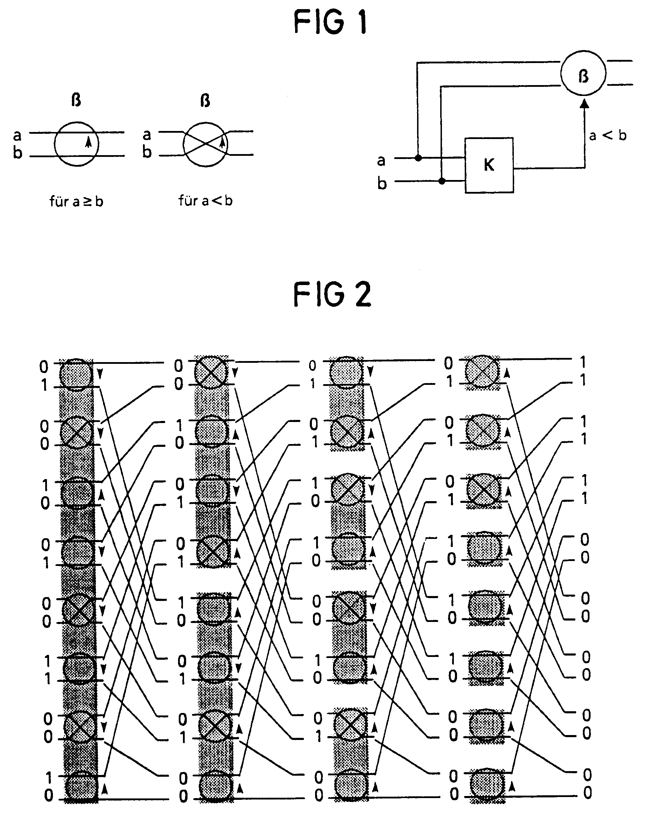

Der Konzentrator besteht aus Beta-Elementen mit Komparator K, die die beiden an ihren Eingängen anliegenden Bits vergleichen und das größere in Pfeilrichtung leiten (Fig. 1). Bei gleichen Bits ist die Stellung des Beta-Elements zunächst unbestimmt. Der Konzentrator erhält am Anfang eines Pakettaktes $2^n$ Pakete, die gemäß ihrem Activity Bit zu trennen sind. Die Pakete passieren dabei zunächst eine Beta-Elementstufe in der ihre Activity Bits paarweise miteinander verglichen werden und in der sie entsprechend eines speziellen Sortieralgorithmus paarweise miteinander vertauscht werden können. Danach werden sie durch eine "Perfect Shuffle" genannte Verbindungsstruktur in definierter Weise gemischt, so daß sich neue Paare von Paketen bilden, die in der nächsten Beta-Elementstufe miteinander verglichen werden. Auf diese Weise durchlaufen die Pakete n Beta-Element-Perfect-Shuffle-Kombinationen, wobei die Datenpakete von den "leeren" Paketen getrennt werden, (vergl. Fig. 2).

Der Sortieralgorithmus steuert die Beta-Elemente $\beta$ in Abhängigkeit von den "leeren" Paketen und den Datenpaketen in folgender Weise:

In der ersten Beta-Elementspalte wird das unterste Beta-Element "nach oben geschaltet". Das bedeutet, daß beim Vergleich eines "leeren" Pakets (Bit 1) mit einem Datenpaket (Bit 0) das Paket mit dem größeren Activity Bit, also das leere Paket, nach oben geleitet wird. Die Schaltung des zweituntersten Beta-Elements hängt nun davon ab, welches Paketpaar das unterste Beta-Element verglichen hat. Bestand das Paar aus einem "leeren" Paket und einem Datenpaket, so wird das zweitunterste Beta-Element "nach unten

2

geschaltet", d. h. die Schaltrichtung ändert sich. Bei zwei gleichartigen Paketen am untersten Beta-Element ändert sich die Schaltrichtung nicht. Auf diese Art und Weise steuert der Algorithmus die Beta-Elementen der ersten Spalte von unten nach oben weiter, wobei die Schaltrichtung jedes Beta-Elements durch seinen Vorgänger und das vom Vorgänger zu vergleichende Paketpaar bestimmt wird. Allgemein ist festzustellen, daß die Pfeilrichtung im Beta-Element nach unten weist, wenn vorher eine ungerade Anzahl von Beta-Elementen mit unterschiedlichen Eingangswerten vorgekommen ist.

Dieser Algorithmus wird auf die ganze erste Spalte angewendet, die damit aus nur einem "Block" besteht. Die zweite Spalte besteht aus zwei Blöcken, die die obere bzw. untere Hälfte der zweiten Spalte umfassen. Mit der alternierenden Steuerung der Beta-Elemente mit ungleichen Steuerbits wird in jedem Block von unten neu begonnen. In entsprechender Weise wird die i-te Spalte in $2^{(i-1)}$ gleichgroße Beta-Elementblöcke unterteilt. Die s-te Spalte besteht also aus $2^{s-1}$ Blöcken, d. h. jedes Beta-Element mit ungleichen Steuerbits schaltet in dieser Spalte den Wert "1" nach oben. Besitzen die beiden Pakete, die von einem Beta-Element verglichen werden, beide das Activity Bit "1" oder "0", so ist es für die Sortierung im Konzentrator gleichgültig, ob die Pakete vertauscht werden oder nicht. Es wird festgestellt, daß sich auch bei ihnen -wie oben beschrieben- die Pfeilrichtung umdreht, wenn vorher an einer ungeraden Anzahl von Beta-Elementen ungleiche Activity Bits anlagen.

Warum der hier beschriebene Algorithmus immer zum richtigen Ergebnis führt, kann man sich zunächst einmal an einem Beispiel mit 16 Eingangsbits klar machen, vergl. Fig. 2. Zum Ordnen der 16 Eingangsbits werden vier Beta-Element-Shuffle-Stufen benötigt. Die Beta-Elemente einer Stufe werden wie bereits beschrieben in Blöcke zusammengefaßt. Zwischen diesen Blöcken liegen die einzelnen Shuffle-Stufen.

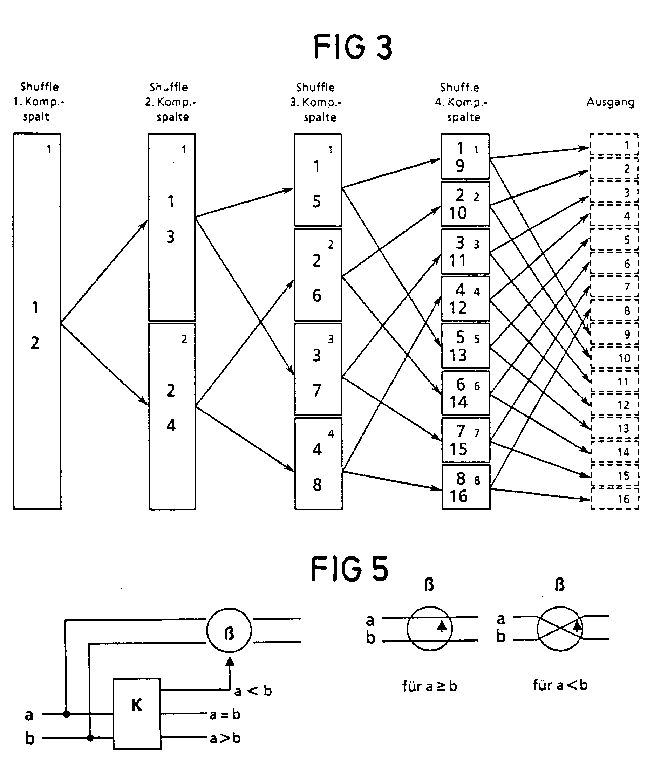

In Fig. 3 ist die Blockbildung im Konzentrator dargestellt. In jedem Block stehen drei Zahlen. Die kleine Zahl rechts oben numeriert die Blöcke in einer Beta-Elementspalte durch. Die beiden größeren Zahlen in den Blöcken geben an, in welche beiden Blöcke der nächsten Spalte die Pakete geleitet werden können. Dabei wird ein Paket in den oberen (bzw. unteren) Block der nächsten Spalte geleitet, falls es vom Beta-Element nach oben (bzw. nach unten) gesteuert wurde. Zum Beispiel werden alle nach oben gesteuerten Pakete der ersten Spalte in den Block 1 der zweiten Spalte geleitet.

Damit die sechs leeren Pakete, vergl. Fig. 2 auf die oberen sechs Ausgänge geleitet werden können, müssen die ersten sechs Blöcke der vierten Spalte jeweils ein leeres Paket enthalten. Um dies zu erreichen, müssen die ersten zwei Blöcke der dritten Spalte jeweils zwei leere Pakete und die restlichen beiden Blöcke jeweils ein leeres Paket enthalten. Dies ist nämlich die einzige Konstellation, die es ermöglicht, daß jeweils ein leeres Paket in die ersten sechs Blöcke der vierten Spalte geleitet werden kann. Dies erkennt man aus der Darstellung in Fig. 3, wenn man in der dritten Spalte die Positionen der Zahlen 1 bis 6 betrachtet.

Prinzipiell ist also in jeder Spalte so vorzugehen, daß die leeren Pakete in der Weise an die Blöcke verteilt werden, daß zunächst der erste, dann der zweite, dann der dritte bis zum letzten Block jeweils ein Paket enthält und danach wieder beim ersten Block begonnen wird, bis alle leeren Pakete verteilt sind. Auf diese Art und Weise erhält man die Verteilung, bei der die oberen Blöcke einer Spalte höchstens ein leeres Paket mehr enthalten als die unteren.

Dies erreicht man aber gerade dadurch, daß man die leeren Pakete mittels des Beta-Elements abwechselnd nach oben und nach unten schickt. Dieses Alternieren der Richtung wird durch die alternierende Steuerung der Beta-Elemente mit ungleichen Steuerbits im beschriebenen Algorithmus erreicht.

Realisierung des Konzentratoralgorithmus:

Die synchron ankommenden Pakete werden dem Konzentrator zugeführt, der die Datenpakete von den "leeren" Paketen trennt. Die Datenpakete werden durch ein Activity Bit "0" gekennzeichnet, die "leeren" Pakete durch "1".

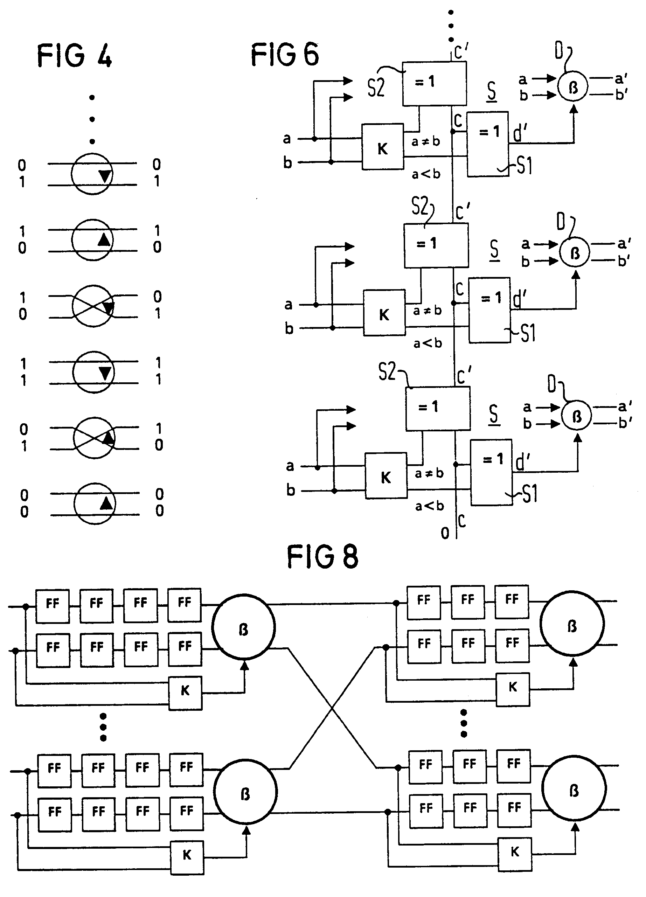

Der Konzentrator ist mehrstufig aufgebaut. Fig. 4 zeigt die erste Stufe mit einem Eingangsbeispiel. Sie besteht aus Beta-Elementen, die von Komparatoren K gesteuert werden, vergl. Fig. 5. Die Pfeilrichtung im Beta-Element gibt an, an welchem Ausgang der größere Wert erscheint. Der Algorithmus für den Konzentrator schreibt vor, daß innerhalb eines Beta-Elemente-Blocks (er umfaßt hier die gesamte 1. Stufe aus Fig. 4) die Pfeilrichtung im Beta-Element nach unten weisen soll, wenn es vorher eine ungerade Anzahl von Beta-Elementen mit ungleichen Eingangswerten gegeben hat. Dabei ergibt sich in Fig. 4 eine "Bewegung" von unten nach oben. D. h. es muß von unten nach oben die mod 2 Summe derjenigen Beta-Elemente gebildet werden , die unterschiedliche Eingangswerte haben.

Zur Umschaltung der Pfeilrichtung ist das Beta-Element-Ausgangssignal noch einmal bedingt zu invertieren. Das kann mit einem EXOR-Gatter geschehen, das sein eines Eingangssignal a in Abhängigkeit von seinem zweiten Eingangssignal b gemäß der Wahrheitstabelle

| a | b | c |
|---|---|---|
| 0 | 0 | 0 |
| 0 | 1 | 1 |
| 1 | 0 | 1 |
| 1 | 1 | 0 |

invertiert.

Auch die mod 2-Summenbildung kann mit einem EXOR Gatter realisiert werden, wie aus der Wahrheitstabelle ersichtlich ist.

Eine Schaltung, in der diese Summenbildung und das bedingte Invertieren des Beta-Elementausgangssignals enthalten ist, zeigt Fig. 6.

Die von unten nach oben aneinandergereihten EXOR-Gatter (entspr. auch der zeitlichen Reihenfolge) haben solange das Ausgangssignal 0, bis sie von einem Beta-Element Signal a≠b umgeschaltet werden. Mit diesem Ausgangssignal 1 werden die die Beta-Elemente steuernden Ausgänge der folgenden Beta-Elementen invertiert, was eine Pfeilrichtungsumkehr der Beta-Elemente (vergl. Fig. 4) bedeutet.

Beim nächsten Beta-Elementsignal a≠b ändert sich das Ausgangssignal des folgenden EXOR-Gatters wieder und die Pfeilrichtung entspricht wieder der anfänglichen Pfeilrichtung.

Die Beta-Elemente verhalten sich also entsprechend der Konzentrator-Algorithmus-Vorschrift.

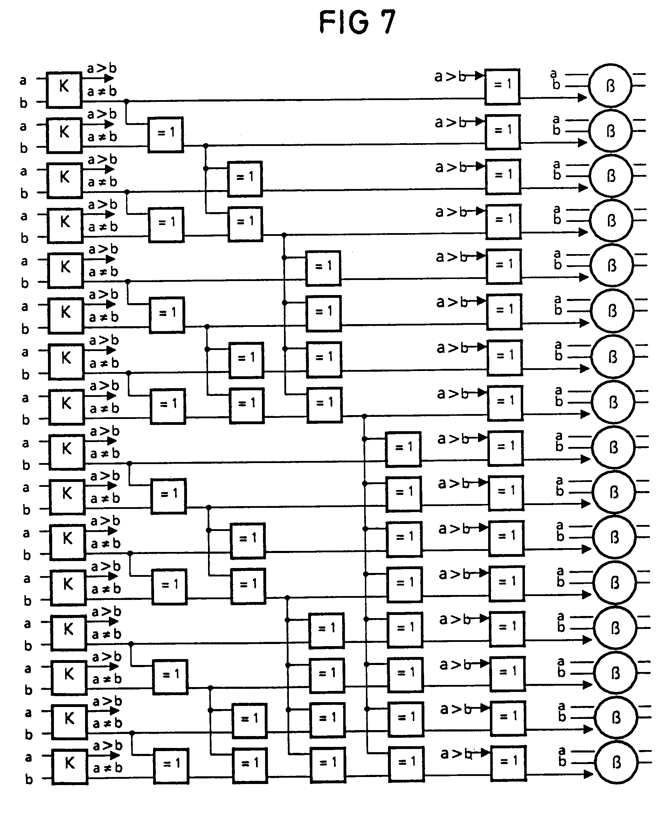

Ein Nachteil dieser Schaltung liegt bei großen Anordnungen darin, daß - bei ansonsten zeitparalleler Verarbeitung - die Summenbildung zeitseriell erfolgen muß. Bei z. B. 1024 Eingängen ergibt sich eine Verzögerung von 512 Gatterlaufzeiten. Eine Möglichkeit, diese Verzögerung zu verkleinern besteht darin, die Eingänge in Gruppen aufzuteilen, in denen die Summenbildung erfolgt, und danach die Ergebnisse einer Gruppe jeweils von der vorhergehenden in einem Schritt invertieren zu lassen, wenn die Berechnung dies erfordert (hierarchische Summenbildung). Wenn z. B. 1024 Eingänge in 2 Gruppen von 512 Eingängen aufgeteilt wird und die Summenbildung in beiden Gruppen zeitparallel abläuft, ergeben sich 256 Gatterlaufzeiten Verzögerung plus 1 Gatterlaufzeit für das bedingte Invertieren der zweiten Gruppe. Die Eingänge können nun in mehrere Gruppen aufgeteilt und diese Gruppen in mehrere Stufen zusammengefaßt werden. (Ein Beispiel mit 32 Eingängen zeigt Fig. 7).

Mit dem Ansatz

$$a \;=\; x_1 \cdot x_2 \ldots x_n \qquad (1a)$$

$$b \;=\; x_1 + x_2 + \ldots + x_n \qquad (1b)$$

mit

    a =     Anzahl der Eingangsgatter
    b =     Anzahl der Gatterlaufzeiten
    n =     Anzahl der Stufen
    x =     Gruppengröße der i-ten Stufe

ergibt sich für die minimale Anzahl der Gatterlaufzeiten die Gruppengröße (bei gegebener Stufenzahl n)

$$x_1 = x_2 = \ldots = x_n = \sqrt[n]{a} \qquad\qquad (2)$$

Das Einsetzen von (2) in (1) ergibt

$$b = n \cdot \sqrt[n]{a} \qquad\qquad (3)$$

Durch Differenzieren und Nullsetzen erhält man für die optimale Stufenzahl

$$n = \ln a \qquad (4)$$

und damit für die optimale Gruppengröße (2)

$$x = \sqrt[\ln a]{a} = e \qquad (5)$$

Ein Beispiel für 1024 Eingänge (512 Eingangsgatter) ist in der folgenden Tabelle dargestellt.

| Stufenzahl | Gruppengröße x | Anzahl der Gatterlaufzeiten b |
|---|---|---|
| 1 | 512 | 512 |
| 2 | 22,6 | 45,2 |
| 3 | 8 | 24 |
| 4 | 4,67 | 19 |
| 5 | 3,48 | 17,4 |
| 6 | 2,83 | 16,9 |
| 7 | 2,44 | 17,1 |
| Anzahl der Gatterlaufzeiten in Abhängigkeit von der Stufenzahl bei 1024 Eingängen | | |

In der Praxis wird man die Stufenzahl n nur erhöhen, solange dies eine entscheidende Verringerung der Gatterlaufzeiten bringt, weil jede zusätzliche Stufe die Zahl der Gatter erhöht.

Auch bei Anwendung der zuvor beschriebenen stufenweisen (hierarchischen) Summenbildung kann die Rechenzeit so groß sein, daß die Takrate herabgesetzt werden muß. Für die Kapazität (den Durchsatz) eines Vermittlungsknotens ist aber eine möglichst hohe Taktrate wichtig. Dagegen ist die Verzögerung, die ein Paket in einem Vermittlungsknoten erfährt, von untergeordneter Bedeutung, weil sie z. B. bei dem als "Starlite" (internationale Patentanmeldung WO 84/04011) bezeichneten System weit unter der Grenze der Auffälligkeit im Sprachverkehr liegt (ca. 10 $\mu$s bei 2048 Eingängen und einer Taktrate von 40 MBit/s).

Dagegen ist es möglich, die Pakete in kurzen Schieberegistern um einige Takte zu verzögern, bis die laufende Summenbildung abgeschlossen ist.

Eine mögliche Realisierung dazu zeigt Fig. 8. Das erste Bit (Activity Bit) wird direkt von dem ersten Flip Flop FF zur laufenden Summenbildung geleitet. Der Rest des Pakets wird verzögert zum Beta-Element geleitet. In den folgenden Stufen werden die Blöcke, in denen die Summenbildung abläuft, kleiner und die Rechenzeit damit kürzer. Man kommt dann mit weniger Schieberegisterstufen für die Paketverzögerung aus.

In der folgenden Tabelle sind die Vorteile des erfindungsgemäßen Konzentrators gegenüber dem in der internationalen Patentanmeldung WO 84/04011 offenbarten System zusammengefaßt:

|  | WO 84/04011 | vorliegende Erfindung |
|---|---|---|
| Summenbildung | 1d n-stellige Zahlen müssen addiert werden (n = Anzahl der Eingänge) | 1-stellige Zahlen müssen addiert werden (mod 2 Summe) |
| Anzahl der Addierer | $n \cdot$ 1d n; Breite 1d n | $<n \cdot$ 1d n, $\geq n/2 \cdot$ 1d n; Breite 1, keine Übertragungsberechnung |
| Algorithmus | gesamte Steuerinformation wird zentral berechnet | stufenweise Verfeinerung der Sortierung, Berechnung dezentral |
| Komplexität | 1dn-stellige Summenbildung muß in Hardware realisiert werden. Doppelte Anzahl von Vermittlungselementen. Trennung der Komponenten zur Berechnung und Durchführung der Steuerung. | nur mod 2-Summenbildung nötig. Integration der Komponenten zur Berechnung u. Durchführung der Steuerung. |
| Leitungsführung | Verschieben der Pakete in 2er Potenzen in "Routing network". Trennung von Berechnung und Routing. Doppelte Anzahl von Routing-Leitungen (2 Möglichkeiten/Paket) →große Leitungslängen | Perfect Shuffle. Damit sind kurze Leitungen möglich. |
| Erweiterbarkeit | begrenzt durch Addierergröße | wegen mod 2-Summenbildung möglich (Länge der Steuerinformation immer nur 1 bit) |
| Verzögerung | gering, trotzdem Schieberegister nötig. | durch hierarchische Summenbildung nicht wesentlich größer |

**Patentansprüche**

1. Konzentrator für schnelle Datenpaketvermittlungsnetze mit $2^n$ Ein- und $2^n$ Ausgängen, gekennzeichnet durch folgende Merkmale:

a) Es sind n Stufen mit je $2^{n-1}$ Schaltelementen ($\beta$) mit je 2 Eingängen und 2 Ausgängen vorgesehen;

b) die s-te Stufe mit $1 \leq s \leq n$ ist in $2^{s-1}$ Blöcke zu je $2^{n-s}$ Schaltelementen unterteilt;

c) die Stufen sind hintereinandergeschaltet und die Schaltelemente benachbarter Stufen sind nach dem Perfect-Shuffle-Prinzip so miteinander verbunden, daß (siehe Figur 2) der obere Ausgang des von oben gezählt i-ten Schaltelements der Stufe s mit dem von oben gezählt i-ten aller Eingänge der Schaltelemente der Stufe s + 1 und der untere Ausgang des von unten gezählt i-ten Schaltelements der Stufe s mit dem von unten gezählt i-ten aller Eingänge der Schaltelemente der Stufe s + 1 verbunden ist, wobei die Eingänge der Schaltelemente der Stufe 1 mit den Eingängen des Konzentrators und die Ausgänge der Schaltelemente der Stufe n mit den Ausgängen des Konzentrators verbunden sind;

d) die Schaltelemente befinden sich jeweils in einem von zwei möglichen Zuständen (↑ bzw. ↓), werden durch das jeweils erste Bit eines Datenpakets gesteuert, und schalten

- im ersten Zustand (↑) das Paket mit dem größeren Steuerbit auf den oberen Ausgang und das Paket mit dem kleineren Steuerbit auf den unteren Ausgang bzw.
- im zweiten Zustand (↓) das Paket mit dem größeren Steuerbit auf den unteren Ausgang und das Paket mit dem kleineren Steuerbit auf den oberen Ausgang,

wobei das unterste Schaltelement eines jeden Blockes in jeder Stufe sich im ersten Zustand (↑) befindet, und jedes übrige Schaltelement sich

- im gleichen Zustand befindet wie das im selben Block der selben Stufe unter ihm liegende Schaltelement, falls die an dessen Eingängen liegenden Steuerbits übereinstimmende Werte haben bzw.
- im zu dem Zustand des im selben Block der selben Stufe unter ihm liegenden Schaltelements entgegengesetzten Zustand befindet, falls die an dessen Eingängen liegenden Steuerbits unterschiedliche Werte haben.

**2.** Konzentrator nach Anspruch 1, dadurch **gekennzeichnet,** daß das Beta-Element ($\beta$) aus einem Signaldurchschalteteil (D) und einem Steuerteil (S) besteht, wobei die zwei Eingänge (a, b) sowohl jeweils an den Signaldurchschalteteil (D) als auch an einen Komparator (K) geführt sind, daß ein Ausgang des Komparators (K), nämlich der Ausgang a<b, an einen ersten Eingang eines Selbststeuerteils (S1) und ein weiterer Ausgang des Komparators, nämlich der Ausgang a≠b, an einen ersten Eingang eines Fremdsteuerteils (S2) angeschlossen ist, daß eine externe Steuerleitung (c) mit einem zweiten Eingang des Selbststeuerteils (S1) und einem zweiten Eingang des Fremdsteuerteils (S2) verbunden ist, daß ein Ausgang (d') des Selbststeuerteils (S1) mit einem Steuereingang des Signaldurchschalteteils (D) verbunden ist, daß ein Ausgang (c') des Fremdsteuerteils (S1) innerhalb des betreffenden Blocks von Beta-Elementen ($\beta$) mit der externen Steuerleitung (c) des benachbarten Beta-Elements ($\beta$) verbunden ist, daß die externe Steuerleitung (c) des rangniedrigsten Beta-Elements ($\beta$) innerhalb des Blocks von Beta-Elementen ($\beta$) fest auf logisch Null liegt, daß der Ausgang (c') des Fremdsteuerteils (S2) des ranghöchsten Beta-Elements ($\beta$) in dem Block von Beta-Elementen ($\beta$) unbeschaltet ist und daß die Schaltungsstruktur des Beta-Elements ($\beta$) gemäß der Wahrheitstabelle

| Eingang | | | Ausgang | | | |
|---|---|---|---|---|---|---|
| a | b | c | a' | b' | c' | d' |
| 0 | 0 | 0 | 0 | 0 | 0 | 0 |
| 0 | 0 | 1 | 0 | 0 | 1 | 1 |
| 0 | 1 | 0 | 1 | 0 | 1 | 1 |
| 0 | 1 | 1 | 0 | 1 | 0 | 0 |
| 1 | 0 | 0 | 1 | 0 | 1 | 0 |
| 1 | 0 | 1 | 0 | 1 | 0 | 1 |
| 1 | 1 | 0 | 1 | 1 | 0 | 0 |
| 1 | 1 | 1 | 1 | 1 | 1 | 1 |

arbeitet, wobei jeweils in den Fällen, in denen d' = 1 ist, daß Beta-Element ($\beta$) seine Durchschaltwege kreuzt.

**3.** Konzentrator nach Anspruch 2, dadurch **gekennzeichnet,** daß die Einstellungen der Beta-Elemente ($\beta$) innerhalb eines Blocks von Beta-Elementen ($\beta$) zeitlich seriell durchgeführt werden.

**4.** Konzentrator nach Anspruch 2, dadurch **gekennzeichnet,** daß die Einstellungen der Beta-Elemente ($\beta$) innerhalb eines Blocks von Beta-Elementen ($\beta$) durch hierarchische Summenbildung durchgeführt wird (Fig. 7).

**5.** Konzentrator nach einem der vorhergehenden Ansprüche, dadurch **gekennzeichnet,** daß jedem der Beta-Elemente ($\beta$) einer Stufe jeweils ein Puffer vorgeschaltet ist, der die Datenpakete derart verzögert, daß diese erst an die Beta-Elemente weitergegeben werden, wenn alle Beta-Elemente dieser Stufe garantiert eingestellt sind.

**6.** Konzentrator nach einem der vorhergehenden Ansprüche, dadurch **gekennzeichnet,** daß vor dem Konzentrator für jede Eingangsleitung ein Puffer vorgesehen ist, so daß ermöglicht ist, daß alle zeitlich versetzt eintreffenden Datenpakete synchron zu dem Konzentrator durchgeschaltet werden.

**Claims**

**1.** Concentrator for fast data packet switching networks having $2^n$ inputs and $2^n$ outputs, characterized by the following features:
a) n stages each having $2^{n-1}$ switch elements ($\beta$) with 2 inputs and 2 outputs each are provided;
b) the $s^{th}$ stage with $1 \leqq s \leqq n$ is divided into $2^{s-1}$ blocks each having $2^{n-s}$ switch elements;
c) the stages are connected in series and the switch elements of adjacent stages are connected to one another according to the perfect shuffle principle in such a way (cf. Figure 2) that the upper output of the $i^{th}$, counting from the top, switch element of the stage s is connected to the $i^{th}$, counting from the top, of all the inputs of the switch elements of the stage $s + 1$ and the lower output of the $i^{th}$, counting from the bottom, switch element of the stage s is connected to the $i^{th}$, counting from the bottom, of all the inputs of the switch elements of the stage s + 1, the inputs of the switch elements of the stage 1 being connected to the inputs of the concentrator and the outputs of the switch elements of the stage n being connected to the outputs of the concentrator;

d) the switch elements are in one of two possible states (↑ and ↓) in each case, are controlled by the respective first bit of a data packet, and

- in the first state (↑) switch the packet with the greater control bit to the upper output and the packet with the lesser control bit to the lower output, and
- in the second state (↓) switch the packet with the greater control bit to the lower output and the packet with the lesser control bit to the upper output,

the lowest switch element of each block in each stage being in the first state (↑), and every other switch element

- being in the same state as the switch element lying below it in the same block of the same stage if the control bits applied to its inputs have matching values, or
- being in the opposite state to the state of the switch element lying below it in the same block of the same stage if the control bits applied to its inputs have different values.

2. Concentrator according to Claim 1, characterized in that the beta element ($\beta$) is composed of a signal through-connect part (D) and a control part (S), the two inputs (a, b) being connected both to the signal through-connect part (D) and to a comparator (K) in each case, in that one output of the comparator (K), namely the output a<b, is connected to a first input of a self-control part (S1) and a further output of the comparator, namely the output a≠b, is connected to a first input of a remote-control part (S2), in that an external control line (c) is connected to a second input of the self-control part (S1) and a second input of the remote-control part (S2), in that an output (d') of the self-control part (S1) is connected to a control input of the signal through-connect part (D), in that an output (c') of the remote-control part (S1) within the respective block of beta elements ($\beta$) is connected to the external control line (c) of the adjacent beta element ($\beta$), in that the external control line (c) of the lowest-order beta element ($\beta$) within the block of beta elements ($\beta$) is permanently connected to logical zero, in that the output (c') of the remote-control part (S2) of the highest-order beta element ($\beta$) in the block of beta elements ($\beta$) is unconnected, and in that the circuit structure of the beta element ($\beta$) operates according to the truth table

| Input | | | Output | | | |
|---|---|---|---|---|---|---|
| a | b | c | a' | b' | c' | d' |
| 0 | 0 | 0 | 0 | 0 | 0 | 0 |
| 0 | 0 | 1 | 0 | 0 | 1 | 1 |
| 0 | 1 | 0 | 1 | 0 | 1 | 1 |
| 0 | 1 | 1 | 0 | 1 | 0 | 0 |
| 1 | 0 | 0 | 1 | 0 | 1 | 0 |
| 1 | 0 | 1 | 0 | 1 | 0 | 1 |
| 1 | 1 | 0 | 1 | 1 | 0 | 0 |
| 1 | 1 | 1 | 1 | 1 | 1 | 1 |

whereby the beta element ($\beta$) crosses its through-connection paths in the cases where d' = 1 in each case.

3. Concentrator according to Claim 2, characterized in that the settings of the beta elements ($\beta$) within a block of beta elements ($\beta$) are carried out serially in terms of time.

4. Concentrator according to Claim 2, characterized in that the settings of the beta elements ($\beta$) within a block of beta elements ($\beta$) are carried out by hierarchical sum formation (Fig. 7).

5. Concentrator according to one of the preceding claims, characterized in that connected upstream of each of the beta elements ($\beta$) of a stage in each case is a buffer which delays the data packets in such a way that the latter are forwarded to the beta elements only once all the beta elements of said stage are guaranteed to be set.

6. Concentrator according to one of the preceding claims, characterized in that a buffer is provided upstream of the concentrator for every input line, so that it is possible for all data packets arriving with a time offset to be synchronously connected through to the concentrator.

**Revendications**

1. Concentrateur pour des réseaux rapides de commutation par paquets de données comportant $2^n$ entrées et $2^n$ sorties, caractérisé par les particularités suivantes :

   a) il est prévu n étages à respectivement $2^{n-1}$ éléments de commutation ($\beta$) à respectivement 2 entrées et 2 sorties;

   b) le s-ième étage, avec $1 \leq s \leq n$, est subdivisé en $2^{s-1}$ blocs de respectivement $2^{n-s}$ éléments de commutation;

   c) les étages sont reliés en série et les éléments de commutation d'étages voisins sont reliés entre eux suivant le principe de rechargement parfait (Principe dit Perfect-Shuffle), de sorte que (voir figure 2) la sortie supérieure du i-ème élément de commutation, compté à partir du haut, de l'étage a est reliée à la i-ème, comptée à partir du haut, de toutes les entrées des éléments de commutation de l'étage s + 1 et la sortie inférieure du i-ème élément de commutation, compté à partir du bas, de l'étage s est reliée à la i-ème, comptée à partir du bas, de toutes les entrées des éléments de commutation de l'étage s + 1, les entrées des éléments de commutation de l'étage 1 étant reliées aux entrées du concentrateur et les sorties des éléments de commutation de l'étage n étant reliées aux sorties du concentrateur;

   d) les éléments de commutation se trouvent respectivement dans un des deux états possibles (↑ ou ↓), sont commandés par le premier bit d'un paquet de données, et commutent
   - dans le premier état (↑), le paquet ayant le bit de commande le plus grand, sur la sortie supérieure, et le paquet ayant le bit de commande le plus petit, sur la sortie inférieure ou
   - dans un deuxième état (↓), le paquet ayant le bit de commande le plus grand, sur la sortie inférieure, et le paquet ayant le bit de commande le plus petit, sur la sortie supérieure,

     l'élément de commutation le plus bas de chacun des blocs dans chaque étage se trouvant dans le premier état (↑) et chaque autre élément de commutation se trouvant
   - dans le même état que l'élément de commutation situé en-dessous de lui dans le même bloc du même étage, dans le cas où les bits de commande présents à ses entrées ont des valeurs concordantes ou
   - dans l'état opposé à l'état de l'élément de commutation présent en-dessous de lui dans le même bloc du même étage, dans le cas où les bits de commande présents à ses entrées ont des valeurs différentes.

2. Concentrateur suivant la revendication 1, caractérisé en ce que l'élément bêta ($\beta$) est constitué d'une unité (D) d'interconnexion de signal et d'une unité de commande (S), les deux entrées (a, b) étant reliées non seulement à l'unité d'interconnexion de signal (D), mais également à un comparateur (K), qu'une sortie du comparateur (K), à savoir la sortie a < b, est reliée à une première entrée d'une unité de commande automatique (S1) et une autre sortie du comparateur, à savoir la sortie a ≠ b, est reliée à une première entrée d'une unité de commande extérieure (S2), qu'une ligne de commande externe (c) est reliée à une deuxième entrée de l'unité de commande automatique (S1) et à une deuxième entrée de l'unité de commande extérieure (S2), qu'une sortie (d') de l'unité de commande automatique (S1) est reliée à une entrée de commande de l'unité d'interconnexion de signal (D), qu'une sortie (c') de l'unité de commande extérieure (S1) est reliée, à l'intérieur du bloc concerné d'éléments bêta ($\beta$), à la ligne externe de commande (c) de l'élément bêta ($\beta$) voisin, que la ligne externe de commande (c) de l'élément bêta ($\beta$) de rang le plus faible, à l'intérieur du bloc d'éléments bêta ($\beta$) est positionnée, de manière fixe, au zéro logique, que la sortie (c') de l'unité de commande extérieure (S2) de l'élément bêta ($\beta$) de rang le plus haut, dans le bloc d'éléments bêta ($\beta$), n'est pas branchée et que la structure de circuit de l'élément bêta ($\beta$) fonctionne suivant la table de vérité,

| Entrée | | | Sortie | | | |
|---|---|---|---|---|---|---|
| a | b | c | a' | b' | c' | d' |
| 0 | 0 | 0 | 0 | 0 | 0 | 0 |
| 0 | 0 | 1 | 0 | 0 | 1 | 1 |
| 0 | 1 | 0 | 1 | 0 | 1 | 1 |
| 0 | 1 | 1 | 0 | 1 | 0 | 0 |
| 1 | 0 | 0 | 1 | 0 | 1 | 0 |
| 1 | 0 | 1 | 0 | 1 | 0 | 1 |
| 1 | 1 | 0 | 1 | 1 | 0 | 0 |
| 1 | 1 | 1 | 1 | 1 | 1 | 1 |

dans les cas où d' = 1, l'élément bêta ($\beta$) croise son trajet d'interconnexion.

**3.** Concentrateur suivant la revendication 2, caractérisé en ce que les réglages des éléments bêta ($\beta$) dans un bloc d'éléments bêta ($\beta$) sont effectués temporellement en série.

**4.** Concentrateur suivant la revendication 2, caractérisé en ce que les réglages des éléments bêta ($\beta$) dans un bloc d'éléments bêta ($\beta$) sont effectués par formation hiérarchique de sommes (figure 7).

**5.** Concentrateur suivant l'une des revendications précédentes, caractérisé en ce qu'à chacun des éléments bêta ($\beta$) d'un étage, est relié en amont un dispositif tampon, qui retarde les paquets de données de sorte que ces derniers sont transmis en premier aux éléments bêta si tous les éléments bêta de cet étage sont réglés de manière garantie.

**6.** Concentrateur suivant l'une des revendications précédentes, caractérisé en ce qu'en amont du concentrateur, il est prévu, pour chaque ligne d'entrée, un dispositif tampon, en sorte qu'il est possible d'interconnecter, de manière synchrone au concentrateur, tous les paquets de données arrivant en étant décalés temporellement.

# FIG 1

# FIG 2

EP 0 309 670 B1

# FIG 3

| Shuffle 1. Komp.-spalt | Shuffle 2. Komp.-spalte | Shuffle 3. Komp.-spalte | Shuffle 4. Komp.-spalte | Ausgang |
|---|---|---|---|---|

# FIG 5

a < b

K

a = b

a > b

a
b

ß

für a ≥ b

a
b

ß

für a < b

12

# FIG 4

# FIG 6

# FIG 8

# FIG 7